Europäisches Patentamt

European Patent Office

Office européen des brevets

(19)

(11) EP 0 842 407 B1

(12) EUROPÄISCHE PATENTSCHRIFT

(45) Veröffentlichungstag und Bekanntmachung des Hinweises auf die Patenterteilung:
**08.03.2000 Patentblatt 2000/10**

(21) Anmeldenummer: **96924818.6**

(22) Anmeldetag: **29.06.1996**

(51) Int Cl.[7]: **G01M 9/06**

(86) Internationale Anmeldenummer:
**PCT/EP96/02850**

(87) Internationale Veröffentlichungsnummer:
**WO 97/05465 (13.02.1997 Gazette 1997/08)**

(54) **VERFAHREN UND WINDKANALWAAGE BEI AERODYNAMISCHEN MESSUNGEN AN FAHRZEUGEN**

PROCESS AND WIND-TUNNEL SCALES FOR AERODYNAMIC MEASUREMENTS ON VEHICLES

PROCEDE ET BALANCE DE SOUFFLERIE POUR MESURES AERODYNAMIQUES SUR DES VEHICULES

(84) Benannte Vertragsstaaten:
**DE FR GB**

(30) Priorität: **28.07.1995 DE 19527742**

(43) Veröffentlichungstag der Anmeldung:
**20.05.1998 Patentblatt 1998/21**

(73) Patentinhaber: **AUDI AG**
**85045 Ingolstadt (DE)**

(72) Erfinder: **WIEDEMANN, Jochen**
**D-85080 Gaimersheim (DE)**

(74) Vertreter: **Geissler, Manfred**
**Audi AG,**
**Abteilung I/EK-P**
**85045 Ingolstadt (DE)**

(56) Entgegenhaltungen:
- **INGENIEURS DE L'AUTOMOBILE, Nr. 5, Juni 1980 - August 1980, BOULOGNE FR, Seiten 23-27, XP002015201 M. SARDOU: "MOYENS D'ESSAIS A RODYNAMIQUES ET EFFET DE SOL"**
- **ENGINEERING (INCL. MACHINE SHOP MAGAZINE), Bd. 229, Nr. 7, Juli 1989 - August 1989, LONDON GB, Seite 3 XP000039826**
- **W.KUHN UND K.-H.RICHTER: "Praktische Methoden zur Bestimmung der Fahrwiderstände von PKW", AUTOMOBIL - INDUSTRIE, , , Band 1985, Nr. 5, Seiten 643 - 649**

**Beschreibung**

Die Erfindung bezieht sich auf ein Verfahren zur Ermittlung der Kräfte und Momente, die während der Anströmung durch ein Fluid an einem Fahrzeug auftreten sowie auf eine für die Durchführung des Verfahrens verwendete Windkanalwaage.

Entsprechende Verfahren sowie zu deren Durchführung geeignete Windkanalwaagen sind im Stand der Technik hinlänglich bekannt. Hinzuweisen ist insoweit beispielsweise auf die europäischen Patentschriften 0 168 527 B1 und 0 504 437 B1. In der jeweiligen Beschreibungseinleitung dieser Patentdokumente wird auf den grundsätzlichen Aufbau sogenannter 6- oder 7-Komponenten-Windkanalwaagen eingegangen.

Während der Schwerpunkt des erstgenannten Patentes darin liegt, bei der Momentenermittlung Lageänderungen des Fahrzeugs auf der Waage, die sich durch die Einwirkung von Luftkräften infolge von Elastizitäten im Fahrwerk, nämlich von Radaufhängung und Reifen, ergeben, zu berücksichtigen, ist es das Ziel des zweitgenannten Patentes, eine besonders hohe Präzision, bei der Bestimmung aerodynamischer Kräfte und Momente zu erzielen; insbesondere soll das elastische Verhalten von Reifen und Fahrwerkaufhängung berücksichtigt werden und die tatsächlichen Krafteinleitungspunkte korrekt in die Messung und Berechnung eingehen.

Bei im Stand der Technik beschriebenen Windkanalwaagen werden die Kräfte über die Fahrzeugräder in Waagenplatinen eingeleitet. Diese sind jeweils mit einer kleinen Antriebseinheit versehen, die aus einer Doppelrolle, aber auch aus einer Einzelrolle oder einer Mini-Laufbandeinheit bestehen kann. Um jeglichen Kraftschluß nach außen zu verhindern, befindet sich der Antriebsmotor ebenfalls in der Platine. Somit ist die gesamte Einheit Teil des gewogenen Systems. Die Fesselung des Fahrzeugs kann über geeignete Stützen erfolgen, die beispielsweise vorne und hinten am Fahrzeugschweller (Wagenheberaufnahme) oder auch an ungefederten Fahrwerkselementen befestigt werden. Die hier übertragenen Kräfte werden ebenfalls in die Waagenplatine eingeleitet. Momente dürfen von den Stützen eigentlich nicht in die Platinen eingeleitet werden, weil es sonst zu einer Verfälschung der Radaufstandskräfte gegenüber der Realität (Fahrt auf der Straße) kommt.

Vom bekannten Stand der Technik ausgehend liegt der Erfindung die Aufgabe zugrunde, das Verfahren zur Ermittlung der Kräfte und Momente auf einer Windkanalwaage so zu optimieren, daß eine weitgehende Übereinstimmung mit tatsächlichen Fahrversuchen auf der Straße hergestellt ist.

Dies gelingt nach der Erfindung durch das kennzeichnende Merkmal des Patentanspruches 1. Eine zur Durchführung des Verfahrens besonders geeignete Windkanalwaage ist mit Patentanspruch 3 beansprucht.

Der Erfindung liegt die Erkenntnis zugrunde, daß die im Stand der Technik bekannten Versuchsanordnungen den wesentlichen Nachteil haben, daß die ermittelten Kräfte und Momente nicht die aufzubringende Antriebsleistung für die Räder, d. h. deren Lüfterleistung (ergibt sich daraus, daß die Radfelge bei rotierendem Rad und bei zusätzlichem Fahrtwindeinfluß wie ein Radial-/Axiallüfter wirkt, was z. B. zur Bremsenkühlung genutzt wird), enthalten, da sich die (elektrischen) Antriebsmotoren der Waagenplatinen-Antriebseinheiten im gewogenen Teil der Versuchsanordnung befinden und von daher das Antriebsmoment als innere Stützkraft nicht bestimmt wird. Die Bestimmung der Lüfterleistung der Fahrzeugräder ist aber sinnvoll, damit schlüssige Vergleiche mit beispielsweise Höchstgeschwindigkeits- oder Ausrollmessungen hergestellt werden können.

Vorteilhafte Weiterbildungen des Verfahrens sind in Patentanspruch 2 dargelegt.

Die Erfindung ist anhand eines Ausführungsbeispiels nachstehend erläutert und in der zugehörigen Zeichnung dargestellt. Diese zeigt als Teil einer Windkanalwaage 10 eine einem Fahrzeugrad 1 eines Personenkraftfahrzeuges 2 zugeordnete und es abstützende Waagenplatine 3. Diese ist in ihrem wesentlichen Aufbau dem Fachmann bekannt und daher hier nur schematisch dargestellt. Zur unmittelbaren Abstützung und zum Antreiben des Fahrzeugrades 1 dient eine Laufbandeinheit, bestehend aus einem Rollenpaar 4,5, wobei die Rollen 4,5 von einem nur dieses Fahrzeugrad 1 beaufschlagenden Laufband 6 umschlungen sind und wobei eine 4 der Rollen 4,5 mittels Treibriemen 7 von einem Elektromotor 8 angetrieben wird. Letzterer ist über geeignete Wägezellen 9 innerhalb der Waagenplatine 3 aufgenommen, so daß es möglich ist, während der Versuchsdurchführung das Reaktionsmoment des Antriebsmotors (Elektromotor 8) zu bestimmen.

Innerhalb der Windkanalwaage 10 ist die Waagenplatine 3 ihrerseits wiederum von Wägezellen 11,12,13 aufgenommen, so daß in bekannter Weise die auftretenden Kräfte (Auftrieb, Luftwiderstand, Seitenkraft) und Momente (Nick, Gier- und Wankmoment) während der Versuchsdurchführung ermittelt werden können.

Die Fesselung des Kraftfahrzeuges 2 erfolgt durch je eine jedem Fahrzeugrad 1 zugeordnete Stützeinheit 14, die am Fahrzeugschweller 15 angreift (Angriffspunkt könnte auch am Fahrwerk sein) und wobei die übertragenen Kräfte am Angriffspunkt 16 in die Waagenplatine 3 eingeleitet werden. Dabei ist es nicht erforderlich, daß diese Fahrzeugfesselung momentenfrei ist. Vielmehr können fälschlicherweise in die Waagenplatine 3 eingeleitet Momente aufgrund der 24-Komponenten-Charakteristik des Gesamtsystems ermittelt und zur Korrektur der gemessenen Radaufstandskräfte benutzt werden.

Durch die bereits erwähnte Ermittlung des Reaktionsmomentes des Elektromotors 8 ist es in erfindungsgemäßer Weise möglich, den Lüftereffekt einer Felge 17 zu bestimmen. Dazu muß zunächst eine sog. Nullmessung, also eine Messung ohne Wind (Pfeil 18) und bei inaktivem Radantrieb erfolgen. Sie dient der Bestimmung der Tarakräfte und -momente, die aus dem Gewichtseinfluß des Kraftfahrzeuges 2 resultieren.

Danach erfolgt eine weitere Messung ohne Wind, allerdings diesmal mit eingeschaltetem Radantrieb (Laufband 6). Sie liefert das Null-Lüftermoment $M_{lü0}$. Das ebenfalls von der Antriebseinheit zu überwindende Radlager-Reibmoment $M_{reib}$ wird von der Waageneinheit nicht gemessen, weil die entsprechende Kraft $F_{reib}$ in der Radaufstandsebene 19 angreift, auf die alle Momente bezogen werden. Die Antriebskraft zur Überwindung der Lüfterkraft $F_{lü0}$ dagegen greift im Radlager 20 des Kraftfahrzeuges 2 an und wird als Lüftermoment $M_{lü0}$ über die Stützeinheit 14 in die Waagenplatine 3 zurückgeführt und dort gemessen. Parallel dazu wird durch die Wägezellen 9 das Reaktionsmoment $M_{reak0}$ des Elektromotors 8 bestimmt, das sich aus der Summe

$$M_{reak0} = M_{lü0} + M_{reib} \qquad (1)$$

zusammensetzt. Durch Differenzbildung zwischen den Signalen der einzelnen 6-Komponenten-Waagen ($M_{lü0}$) und der Wägezellen 9 an den Antriebsmotoren ($M_{reak0}$) erhält man also das an jedem Fahrzeugrad 1 übertragene Reibmoment $M_{reib}$

$$M_{reib} = M_{reak0} - M_{lü0}. \qquad (2)$$

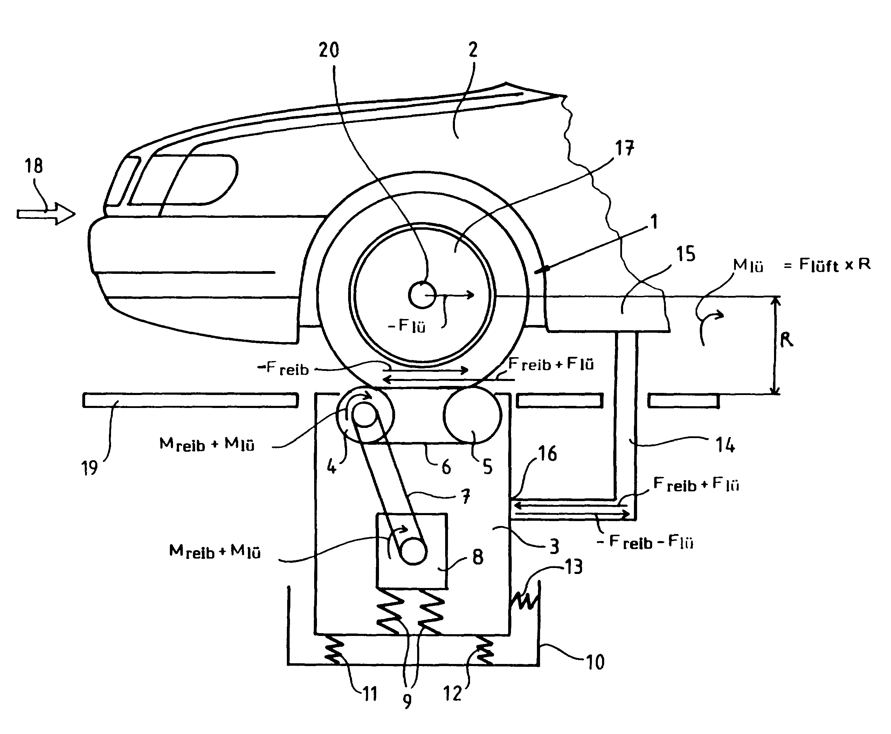

Im Anschluß daran werden bei der Messung mit Wind (Pfeil 18) zunächst an jedem Fahrzeugrad 1 sechs aerodynamische Kräfte und Momente (ohne Index -0-, wie in der Zeichnung dargestellt), also, wie an sich bekannt, insgesamt 24 Komponenten bestimmt. Diese werden zu den bekannten aerodynamischen Fahrzeug-Kenngrößen Widerstand, Auftrieb, Seitenkraft, Nick-, Gier- und Rollmoment umgerechnet. Statt der Momente können natürlich in bekannter Weise auch die Auftriebs- und Seitenkräfte jeweils für die Vorder- und die Hinterachse getrennt angegeben werden. Allerdings enthält das so gemessene Nickmoment $M_{N'}$ noch zusätzlich das Lüftermoment $M_{lü}$ der im Radmittelpunkt angreifenden Kraft $F_{lü}$. Es gilt also

$$M_{N'} = M_N + M_{lü}. \qquad (3)$$

Die Wägezellen 9 unter den vier Elektromotoren 8 liefern jeweils die Momentensumme

$$M_{reak} = M_{lü} + M_{reib}. \qquad (4)$$

Das Lüftermoment $M_{lü}$ enthält nun, wie bereits oben angedeutet, nicht mehr den Index -0-, weil es nun aus einer Messung unter Windlast resultiert.

Durch Differenzbildung zwischen den Gleichungen (3) und (4) erhält man

$$M_{N'} - M_{reak} = M_N - M_{reib}. \qquad (5)$$

Die Addition der Gleichungen (5) und (2) liefert schließlich das um den Lüftereinfluß (Lüftermoment) korrigierte Nickmoment $M_N$ (unter Berücksichtigung von an sich nicht zulässiger Momenteneinleitung in die Waagenplatine 3).

$$M_N = M_{N'} - M_{reak} + M_{reak0} - M_{lü0} \qquad (6)$$

Die Differenz zwischen den Gleichungen (4) und (2) wiederum liefert das gesuchte Lüftermoment $M_{lü}$ unter Windeinfluß.

$$M_{lü} = M_{reak} - M_{reak0} + M_{lü0} \qquad (7)$$

Durch Multiplikation mit der Kreisfrequenz $\omega$ erhält man die gesuchte Lüfterleistung eines jedes Fahrzeugrades 1, die der aerodynamischen Verlustleistung zuzuschlagen ist. Es ergibt sich somit

$$P_{lü} = M_{lü} \cdot \omega \qquad (8)$$

Die Verfahrensweise zur Ermittlung der Lüfterleistung geschieht in analoger Weise, wenn anstelle der vorstehend beschriebenen 24-Komonentenwaage eine sog. Brücken- oder 6-Komponentenwaage verwendet wird. Bei einer solchen alternativen Waage ruhen bekanntermaßen alle Antriebseinheiten auf einem gemeinsamen Rahmen (Waagenbrücke) und alle Kräfte und Momente werden nicht für jedes Eizelrad, sondern gemeinsam für die gesamte Brücke gemessen. Auf diese Weise werden die Werte $M_N$ und $M_{lü}$ für das komplette Fahrzeug und nicht pro Einzelrad erhalten.

**Patentansprüche**

**1.** Verfahren zur Ermittlung von Kräften und Momenten, die während der Anströmung durch ein Fluid an einem Fahrzeug auftreten, dadurch gekennzeichnet, daß bei sich drehendem Fahrzeugrad (1) auch das aus der Lüfterwirkung einer Radfelge (17) sich ergebende und aufzubringende Lüftermoment bzw. die sich daraus ableitende Lüfterleistung ermittelt werden.

**2.** Verfahren nach Anspruch 1, gekennzeichnet durch die Schritte

- Vornahme einer Nullmessung, also einer Messung ohne Fluid-Anströmung, zur Ermittlung der Tarakräfte und -momente, die aus dem Gewichtseinfluß des Fahrzeuges (2) resultieren,

- nachfolgende Messung wiederum ohne Fluid-Anströmung, allerdings mit eingeschaltetem Radantrieb (6) zur jeweiligen Ermittlung eines Null-Lüftermomentes $M_{lü0}$ und eines Reaktionsmomentes $M_{reak0}$ eines dem Radantrieb dienenden Antriebsmotors (8)

- Messung mit Fluid-Anströmung (18) und Radantrieb (6) zur Ermittlung der am Fahrzeugrad (1) auftretenden aerodynamischen Kräfte und Momente und zur Ermittlung des Reaktionsmoments $M_{reak}$.

**3.** Windkanalwaage zur Durchführung des Verfahrens nach Patentanspruch 1, bestehend aus mindestens einer, den Fahrzeugrädern (1) zugeordneten und mindestens eine Laufbandeinheit (4, 5), aufweisenden Waageneinheit (3), welche innerhalb der Windkanalwaage (10) von Wägezellen (11,12,13) zur Ermittlung der auftretenden Kräfte und Momente aufgenommen ist, dadurch gekennzeichnet, daß auch jeder Antriebsmotor (8) zur Ermittlung seines Reaktionsmomentes von Wägezellen (9) aufgenommen ist.

**4.** Windkanalwaage nach Anspruch 3, dadurch gekennzeichnet, daß die Fesselung des Fahrzeuges (2) durch je eine jedem Fahrzeugrad (1) zugeordnete Stützeinheit (14) erfolgt, welche fahrzeugseitig (15) angreift und wobei die übertragenen Kräfte unmittelbar in die Waagenplatine (3) eingeleitet werden.

## Claims

**1.** A procedure for determining forces and moments which occur during the impingement of a fluid on a vehicle, characterised in that when a vehicle wheel (1) is turning the fan moment to be applied, or the fan output which is derived therefrom, which results from the fan effect of a wheel rim (17), is also determined.

**2.** A procedure according to claim 1, characterised by the steps of

- making a zero measurement, namely a measurement without the impingement of fluid, in order to determine the tare forces and moments which result from the effect of the weight of the vehicle (2),

- a subsequent measurement, again without fluid impingement but with the wheel drive (6) switched on, for the determination in each case of a zero fan moment $M_{fan0}$ and of a moment of reaction $M_{react0}$ of a drive motor (8) which is employed for driving the wheel,

- a measurement with fluid impingement (18) and comprising the wheel drive (6), in order to determine the aerodynamic forces and moments which act on the vehicle wheel (1) and in order to determine the moment of reaction $M_{reac}$.

**3.** A wind tunnel installation for carrying out the procedure according to claim 1, consisting of at least one balance unit (3), which is associated with the vehicle wheels (1), which comprises at least one moving belt unit (4,5), and which is sensed by load cells (11,12,13) inside the wind tunnel balance (10), for determining the forces and moments which occur, characterised in that each drive motor (8) is also sensed by load cells (9) in order to determine its moment of reaction.

**4.** A wind tunnel installation according to claim 3, characterised in that the vehicle (2) is held captive by a support unit (14) which is associated with each vehicle wheel (1) and which acts on the vehicle (15), wherein the transmitted forces are introduced directly into the balance plate (3).

## Revendications

**1.** Procédé pour déterminer des forces et des couples qui apparaissent pendant l'application d'un courant d'un fluide à un véhicule, caractérisé en ce qu'on détermine également, alors que la roue (1) du véhicule tourne, le couple de ventilation, qui est obtenu à partir de l'action de ventilation de la jante (17) de la roue et doit être absorbé, et la puissance de ventilation qui en résulte.

**2.** Procédé selon la revendication 1, caractérisé par les étapes :

- exécution d'une mesure de zéro, c'est-à-dire d'une mesure sans charge d'application d'un courant de fluide, pour la détermination des forces et des couples de tare, qui résultent de l'influence du poids du véhicule (2);
- mesure ultérieure, à nouveau sans courant de fluide, d'une manière générale avec le dispositif (6) d'entraînement des roues à l'état activé, pour la détermination respective d'un couple de ventilation nul ($M_{lü0}$) et d'un couple de réaction ($M_{reakO}$) d'un moteur d'entraînement (8) utilisé comme dispositif d'entraînement des roues,

- mesure avec un courant de fluide (18) et activation du dispositif (6) d'entraînement des roues, pour la détermination des forces et des couples aérodynamiques, qui apparaissent au niveau de la roue (1) du véhicule, et pour la détermination du couple de réaction ($M_{reak}$).

3. Balance de soufflerie, pour la mise en oeuvre du procédé selon la revendication 1, constituée par au moins une unité de pesée (3), associée aux roues (1) du véhicule et comportant au moins une unité formant bande de roulement (4,5) et qui logée à l'intérieur de la balance de soufflerie (10) dans des cellules de pesée (11,12,13) servant à déterminer des forces et couples appliqués, caractérisée en ce que chaque moteur d'entraînement (8) est également logé dans des cellules de pesée (9), pour la détermination du couple de réaction de ce moteur.

4. Balance de soufflerie selon la revendication 3, caractérisée en ce que le soutien du véhicule (2) est réalisé au moyen d'une unité de support (4), qui est associée à chaque roue (1) du véhicule et qui est fixée côté véhicule (15), les forces transmises étant appliquées directement à la platine (3) de la balance.

EP 0 842 407 B1